# EUROPEAN PATENT SPECIFICATION

(11) **EP 1 665 425 B1**
(45) Date of publication and mention of the grant of the patent: **06.06.2007**
(21) Application number: 04744800.6
(22) Date of filing: 18.08.2004
(51) Int. Cl.: H01M 6/40, H01M 6/18

(54) **ELECTROCHEMICAL ENERGY SOURCE, ELECTRONIC DEVICE AND METHOD OF MANUFACTURING SAID ENERGY SOURCE**
ELEKTROCHEMISCHE ENERGIEQUELLE, ELEKTRONISCHE EINRICHTUNG UND VERFAHREN ZUR HERSTELLUNG DER ENERGIEQUELLE
SOURCE D'ENERGIE ELECTROCHIMIQUE, DISPOSITIF ELECTRONIQUE ET PROCEDE DE FABRICATION DE LADITE SOURCE D'ENERGIE

(30) Priority: 15.09.2003 EP 03103386; 22.06.2004 EP 04102887
(43) Date of publication of application: 07.06.2006
(73) Proprietor: Koninklijke Philips Electronics N.V., 5621 BA Eindhoven (NL)
(72) Inventor: NOTTEN, Petrus, H., L., NL-5656 AA Eindhoven (NL); OUWERKERK, Martin, NL-5656 AA Eindhoven (NL); ROOZEBOOM, Freddy, NL-5656 AA Eindhoven (NL)
(74) Representative: van Wermeskerken, Stephanie Ch.
(86) International application number: PCT/IB2004/051483
(87) International publication number: WO 2005/027245

(56) References cited:
- WO-A-00/25378
- WO-A-01/73864
- WO-A-95/14311
- WO-A-03/005477
- WO-A-20/04036668
- US-B1- 6 558 836

## Description

The invention relates to an electrochemical energy source comprising at least one assembly of: a first electrode, a second electrode, and an intermediate solid-state electrolyte separating said first electrode and said second electrode. The invention also relates to an electronic device provided with such an electrochemical energy source. Moreover, the invention relates to a method of manufacturing such an electrochemical energy source.

Electrochemical energy sources based on solid-state electrolytes are known in the art. These (planar) energy sources, or `solid-state batteries', are constructed as stated in the preamble. Solid-state batteries efficiently and cleanly convert chemical energy directly into electrical energy and are often used as the power sources for portable electronics. At a smaller scale such batteries can be used to supply electrical energy to e.g. microelectronic modules, more particularly to integrated circuits (ICs). An example hereof is disclosed in international patent application WO 00/25378, where a solid-state thin-film micro battery is fabricated directly onto a specific substrate. During this fabrication process the first electrode, the intermediate solid-state electrolyte, and the second electrode are subsequently deposited onto the substrate. Although the known micro battery commonly exhibits superior performance as compared to other solid-state batteries, the known micro battery has several drawbacks. A major drawback of the known micro battery of WO 00/25378 is that its manufacturing process is relatively complex and therefore relatively expensive.

US 6 558 836 B1 discloses a process for making thin-film batteries, wherein the battery structure comprises (a) an adhesion layer of cobalt deposited on a non-metallic substrate, (b) a current collector layer of platinum deposited on said adhesion layer, (c) a cathode layer sputtered over said adhesion layer and current collector layer, (d) a lithium-based solid state electrolyte layer sputtered from over said cathode layer, (e) a lithium-based metal anode formed from over said electrolyte layer, (f) an anode lead, (g) a cathode lead and (h) a package sealing and protecting said structure.

WO 03/005477 A discloses a battery comprising a substrate, a cathode on the substrate, a cathode current collector, an electrolyte and an anode contacting the electrolyte. WO 01/73864 A discloses a method of fabricating an energy storage device comprising (i) providing a substrate, (ii) forming an electrode first film, (iii) forming an electrolyte second film and (iv) forming an electrode third film.

WO 95/14311 A discloses a solid state battery comprising (A) a substrate, (B) at least one multilayered electrochemical cell deposited onto said substrate, each layer of said multilayered electrochemical cell comprising (1) a layer of negative electrode material, (2) a layer of positive electrode material and (3) a layer of insulating/conducting material disposed between said layer of negative electrode material and said layer of positive electrode material, and (C) an electrically conductive layer deposited atop the last of said multilayered electrochemical cells.

It is an object of the invention to provide an improved electrochemical energy source, which can be constructed and manufactured in a relatively simple manner, while maintaining the advantage of the known electrochemical energy sources.

The object of the invention is achieved by an electrochemical energy source according to the preamble, characterized in that said first electrode is formed at least partially by a conducting substrate on which the solid-state electrolyte and the second electrode are deposited. In this way the electron-conducting substrate also functions as at least a part of the first electrode. The integration of said substrate and at least a part of said first electrode leads commonly to a simpler construction of the (micro)battery compared to those known in the art. Moreover, the way of manufacturing an energy source according to the invention is also simpler, as at least one process step can be eliminated. The relatively simple manufacturing method of the solid-state energy source according to the invention may furthermore lead to significant cost saving. Preferably, the solid-state electrolyte and the second electrode are deposited on the substrate as thin film layers with a thickness of approximately between 0.5 and 5 micrometer. Thin film layers result in higher current densities and efficiencies because the transport of ions in the energy source is easier and faster through thin-film layers than through thick-film layers. In this way the internal energy loss may be minimized. As the internal resistance of the energy source is relatively low the charging speed may be increased when a rechargeable energy source is applied.

In a preferred embodiment a contact surface of the substrate facing the electrolyte and the second electrode is patterned at least partially. In this way an increased contact surface per volume between both electrodes and the solid-state electrolyte is obtained. Commonly, this increase of the contact surface(s) between the components of the energy source according to the invention leads to an improved rate capacity of the energy source, and hence a better battery capacity (due to an optimal utilization of the volume of the layers of the energy source). In this way the power density in the energy source may be maximized and thus optimized. The nature, shape, and dimensioning of the pattern may be arbitrary.

In general, the contact surface may be patterned in various ways, e.g. by providing extensions to the contact surface which project away from the contact surface. Preferably, the contact surface is provided with a plurality of cavities of arbitrary shape and dimension, said electrolyte and said second electrode being provided to at least a part of an inner surface of said cavities. This has the advantage that the patterned contact surface may be manufactured in a relatively simple way. In an embodiment the cavities are linked, enabling multiple protruding pillars to be formed on the substrate to increase the contact surface within the electrochemical energy source. In another preferred embodiment at least a part of the cavities form slits or trenches in which the solid-state electrolyte and the second electrode are deposited. The pattern, more particularly the cavities, on the contact surface of the conducting substrate may be formed for example by way of etching.

At least one of the first electrode and the second electrode is preferably coupled to a current collector. In the case of a silicon substrate a current collector may not be needed for the first electrode. However, for e.g. a Li-ion battery with a LiCoO₂ electrode as second electrode preferably an aluminum current collector (layer) is applied. Alternatively, or in addition, a current collector manufactured of, preferably doped, semiconductor material such as e.g. Si, GaAs, InP, or of a metal such as copper or nickel may be applied in general as a current collector in solid-state energy sources according to the invention.

The substrate may have a main surface on or in which the cavities are formed and which defines a plane. A perpendicular projection of the current collector onto this plane may at least partly overlap with a perpendicular projection of a cavity onto this plane, and preferably with a perpendicular projection of all cavities onto this plane. In this way the current collector is relatively close to the cavity, which increases the maximum current. In an embodiment the current collector extends into a cavity, preferably into all cavities. This leads to a further increase of the rate capacity. It is particularly advantageous for the cavities to be relatively deep, i.e. a depth of 20 micrometers or more.

In an embodiment the substrate is adapted for (temporary) storage of ions of at least one of following atoms: H, Li, Be, Mg, Na and K. So, the electrochemical energy source according to the invention may be based on various intercalation mechanisms and is therefore suitable to form different kinds of batteries, e.g. Li-ion batteries, NiMH batteries, etc.

In another embodiment the substrate is made of at least one of the following materials: C, Si, Sn, Ti, Ge and Pb. A combination of these materials may also be used to form the substrate. Preferably, n-type or p-type doped Si is used as a substrate, or a doped Si-related compound, like SiGe or SiGeC. Also other suitable materials may be applied as a substrate, provided that the material of the substrate is adapted for intercalation and storing of ions, such as e.g. of the atoms mentioned in the previous paragraph. Moreover, these materials are preferably suitable to undergo an etching process to apply a pattern (holes, trenches, pillars, etc.) on the contact surface of the substrate.

The solid-state electrolyte applied in the energy source according to the invention may be based either on ionic conducting mechanisms or non-electronic conducting mechanisms, e.g. ionic conductors for H, Li, Be and Mg. An example of a Li conductor as solid-state electrolyte is Lithium Phosphorus Oxynitride (LiPON). Other known solid-state electrolytes like e.g. Lithium Silicon Oxynitride (LiSiON), Lithium Niobate (LiNbO₃), Lithium Tantalate (LiTa03), Lithium orthotungstate (Li2WO4), and Lithium Germanium Oxynitride (LiGeON) may also be used as a Lithium conducting solid-state electrolyte. A proton-conducting electrolyte may for example be formed by TiO(OH). Detailed information on proton conducting electrolytes is disclosed in international application WO 02/42831. The first (positive) electrode for a lithium ion based energy source may be e.g. the positive electrode and may be manufactured of metal-oxide based materials, e.g. LiCoO₂, LiNiO₂, LiMnO₂ or a combination of these, such as e.g. Li(NiCoMn)O₂. Examples of a first (positive) electrode in the case of a proton based energy source are Ni(OH)₂ and NiM(OH)₂, wherein M is formed by one or more elements selected from the group of e.g. Cd, Co, or Bi.

In yet another embodiment the solid-state electrolyte and the second electrode are deposited on multiple sides of the substrate. In this way the substrate is used more intensively for storage of ions, thereby increasing the electric capacity of the electrochemical energy source according to the invention.

Preferably, the electrochemical energy source comprises multiple assemblies electrically coupled together. The assemblies may be coupled both in a serial and/or in a parallel way dependent on the requirements of the application of the electrochemical energy source. When a relatively high current is required, the first electrodes and the second electrodes of several assemblies are electrically coupled in parallel. When a relatively high voltage is required, the first electrode of a first assembly may be electrically coupled to the second electrode of a second assembly. The first electrode of the second assembly may be electrically coupled to a second electrode of a third assembly and so forth.

The substrate may comprise a first part, which constitutes the first electrode, and a second part free from contact with the first part. The second part may comprise an electric device integrated in the second part. Preferably, the substrate comprises a barrier layer for reducing and preferably substantially preventing diffusion of ions from the first part to the second part. When the substrate is adapted for storage of Li-ions, for example by applying a silicon wafer, such a barrier layer can be formed of Si₃N₄ or SiO₂ to prevent the Li-ions from exiting the first electrode (wafer).

Preferably, the substrate is supported by a support structure in order to consolidate the electrochemical energy source. In specific cases the application of such a support structure may be desirable. For example if a titanium or a titanium comprising substrate is used for hydrogen storage in a battery with a structure according to the invention, a support structure may be used to strengthen the construction of the energy source. Noted is that a titanium substrate may be manufactured by way of a (temporary) dielectric layer on which the substrate is deposited. After this deposition process the dielectric layer may be removed. For further support of the titanium substrate the electrically non-conducting support structure may be used. It may be advantageous to remove the substrate partially by decreasing its thickness, thereby improving the energy density of the energy source. For example from a substrate with a thickness of about 500 micrometer the energy source may be transferred to a substrate with a thickness of about 10-200 micrometer. To perform this adaptation of the substrate the (known) 'substrate transfer technology' may be applied.

In a preferred embodiment the first electrode comprises an electron-conducting barrier layer adapted to at least substantially preclude diffusion of intercalating ions into said substrate, said barrier layer being applied onto said substrate. This preferred embodiment is commonly very advantageous, since intercalating ions taking part in the (re)charge cycles of the electrochemical source according to the invention often diffuse into the substrate, such that these ions do no longer participate in the (re)charge cycles, resulting in a diminished storage capacity of the electrochemical source. Commonly, a monocrystalline silicon conductive substrate is applied to carry electronic components, such as integrated circuits, chips, displays, et cetera. This crystalline silicon substrate suffers from this drawback that the intercalating ions diffuse relatively easily into said substrate, resulting in a reduced capacity of said energy source. For this reason it is considerably advantageous to apply a barrier layer onto said substrate to preclude said unfavorable diffusion into the substrate. Migration of the intercalating ions will be blocked at least substantially by said barrier layer, as a result of which migration of these ions through the substrate will no longer occur, while migration of electrons through said substrate is still possible. According to this embodiment it is no longer necessary that the substrate is adapted to (for ?) storage of the intercalating ions. Therefore, it is also possible to apply electron-conductive substrates other than silicon substrates, like substrates made of metals, conductive polymers, et cetera. Said barrier layer is at least substantially made of at least one of the following compounds: tantalum, tantalum nitride, and titanium nitride. The material of the barrier layer is however not limited to these compounds. These compounds have as common property a relatively dense structure which is impermeable to the intercalating ions, including lithium ions. In a particular, preferred embodiment the first electrode further comprises an intercalating layer deposited onto a side of said barrier layer opposite to the substrate. Said intercalating layer is thereby adapted to store (and release) the intercalating ions (temporarily). According to this embodiment the first electrode is thus formed by a laminate of said substrate, said barrier layer, and said intercalating layer. Commonly, the laminate will be formed by stacking (depositing) the barrier layer and the intercalating layer onto said substrate. However, in a particular embodiment the laminate can also be formed by means of implantation techniques, wherein for example a crystalline silicon substrate is bombarded with for example tantalum ions and nitrogen ions, after which the temperature of the implanted substrate is sufficiently raised to form the physical barrier layer buried within said original substrate. As a result of the bombardment of the silicon substrate with ions, commonly the lattice of the crystalline top layer of the original substrate will be destructed, resulting in an amorphous top layer forming said intercalating layer. In a preferred embodiment said intercalating layer is at least substantially made of silicon, preferably amorphous silicon. An amorphous silicon layer has the outstanding property to store (and release) relatively large amounts of intercalating ions per unit of volume, which results in an improved storage capacity of the electrochemical source according to the invention. Preferably, said barrier layer is deposited onto said substrate. Both said barrier layer and said intercalating layer are preferably deposited onto said substrate by way of low pressure Chemical Vapor Deposition (LPCVD).

The invention further relates to an electronic module provided with at least one such electrochemical energy source. The electronic module may be formed by an integrated circuit (IC), microchip, display, et cetera. The combination of the electronic module and the electrochemical energy source may be constructed in a monolithic or non-monolithic way. In the case of a monolithic construction of said combination preferably a barrier layer for ions is applied between the electronic module and the energy source. In an embodiment the electronic module and the electrochemical energy source form a System in Package (SiP). The package is preferably non-conducting and forms a container for the aforementioned combination. In this way an autonomous ready-to-use SiP may be provided in which besides the electronic module an energy source according to the invention is provided.

The invention further relates to an electronic device provided with at least one such electrochemical energy source or, preferably, one such electronic module. An example of such an electronic device is a shaver, wherein the electrochemical energy source may function for example as a backup (or primary) power source. Another example of an electric device wherein an energy source according to the invention may be incorporated is a so-called 'smart-card' containing a microprocessor chip. Current smart-cards require a separate bulky card reader to display the information stored on the card's chip. But with a, preferably flexible, micro battery, the smart-card may comprise for example a relatively tiny display screen on the card itself that allows users easy access to data stored on the smart-card.

The invention relates moreover to a method of manufacturing such an electrochemical energy source, comprising the steps of: A) depositing the solid-state electrolyte on the substrate, and B) subsequently depositing the second electrode on the substrate. During the application of step A) and step B) preferably one of the following deposition techniques is used: Physical Vapor Deposition (PVD), Chemical Vapor Deposition (CVD), and Atomic Vapor Deposition (AVD). Examples of PVD are sputtering and laser ablation, that requires commonly trench widths of the order of ≥ 20 micrometer. Examples of CVD are LP-CVD and Atomic Layer Deposition (ALD). AVD is preferably carried out at relatively low pressures (approximately 150 mbar or lower). These techniques are well known to persons skilled in the art and allow a pore diameter in the substrate of the order of > 0.5 micrometer.

In a preferred embodiment the method is provided with step C) comprising patterning of at least one contact surface of the substrate, step C) being carried out prior to step A). As explained above, the patterning of a surface of the substrate increases the contact surface per volume unit of the different components of the energy source, thereby increasing the rate capability. In an embodiment an etching technique may be used for patterning such as wet chemical etching and dry etching. Well-known examples of these techniques are RIE and Focused Ion Beam (FIB).

In an embodiment of the method, the method comprises a step D) comprising subsequently depositing an electron-conducting barrier layer and an intercalation layer on the substrate. Step D) may be applied prior to step A).

The invention is illustrated by way of the following non-limitative examples, wherein:
Fig. 1 shows a perspective view of an electrochemical energy source according to the invention,
Fig. 2 shows a cross-section of another electrochemical energy source according to the invention, and
Fig. 3 shows a schematic view of a monolithic system in package according to the invention.
Fig. 4 shows a perspective view of an alternative micro battery according to the invention.

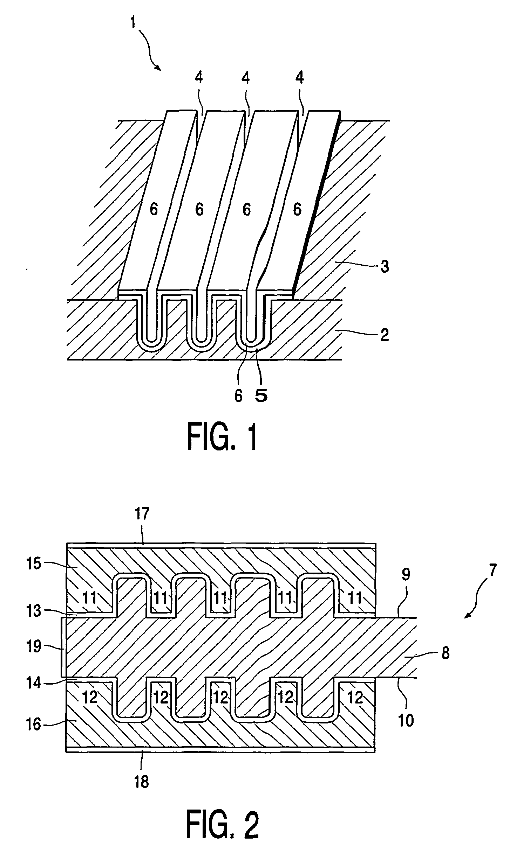

Fig. 1 shows a perspective view of an electrochemical energy source 1 according to the invention, more particularly a Li-ion micro battery according to the invention. The energy source 1 comprises a silicon substrate 2 which functions as a negative electrode of the energy source 1. The silicon substrate 2 may for example be formed by a silicon wafer as frequently used for ICs. The substrate 2 may have a thickness larger than 20 micrometer, larger than 100 micrometer or even larger than 500 micrometer. In an upper surface 3 of the silicon substrate 2 several slits 4 are etched by way of existing etching techniques. The dimensioning of these slits 4 may be arbitrary. Preferably, the width of a slit 4 is approximately between 2 and 10 micrometer and the depth of the slit 4 is approximately between 10 and 100 micrometer. On the patterned upper surface 4 a solid-state electrolyte layer 5 is deposited. The electrolyte layer 5 has a thickness of about 1 micrometer, and is preferably made of Lithium Phosphorus Oxynitride (LiPON). On the LiPON layer 5 a positive electrode layer 6 is deposited in a thickness of about 1 micrometer. The positive electrode 6 is preferably made of LiCoO₂, possibly mixed with carbon fibers. Deposition of the electrolyte 5 and the positive electrode 6 onto the upper surface 4 of the substrate 2 takes place by way of conventional deposition techniques, such as chemical or physical vapor deposition, and atomic layer deposition. By etching the substrate 2 the contact surface between both electrodes 2,6 and the electrolyte 5 may be increased (significantly) per volume unit, resulting in an improved (maximized) rate capability and power density in the energy source 1. Optionally, an aluminum current collector (not shown) can be coupled to the positive electrode 6. The construction of the energy source 1 as shown is a relatively efficient and simple construction, and is furthermore relatively simple to manufacture. Moreover, the performance of the shown energy source 1 is optimized by minimizing the layer thickness of the electrolyte and maximizing the mutual contact surface between the components 2, 5, 6 of the energy source 1.

Fig. 2 shows a cross-section of another electrochemical energy source 7 according to the invention. The energy source 7 comprises a substrate 8, which functions as the negative electrode of the energy source 7. Both an upper surface 9 and a lower surface 10 of the substrate 8 are patterned. The patterns are formed by cavities 11, 12 etched in the substrate 8. Both on the upper surface 9 and on the lower surface 10 an electrolytic layer 13, 14 is deposited. On top of each electrolytic layer 13, 14 subsequently a positive electrode 15, 16 is deposited. The positive electrodes 15, 16 are each (at least) partially covered by a current collector 17, 18. Both current collectors 17, 18 are mutually coupled (not shown). The substrate 8 is also provided with a separate current collector 19. The intercalation mechanism applied and the materials used in this energy source 7 may vary. The energy source 7 as shown can for example form a Li-ion (micro)battery or a NiMH battery. As already stated above, the surfaces 9, 10 of the substrate 8 are patterned for improving the energy density of the energy source 7. As the substrate 8, which can be used as e.g. a chip carrier at the same time, is used to store ions, a relatively effective construction for an energy source 7 can be obtained.

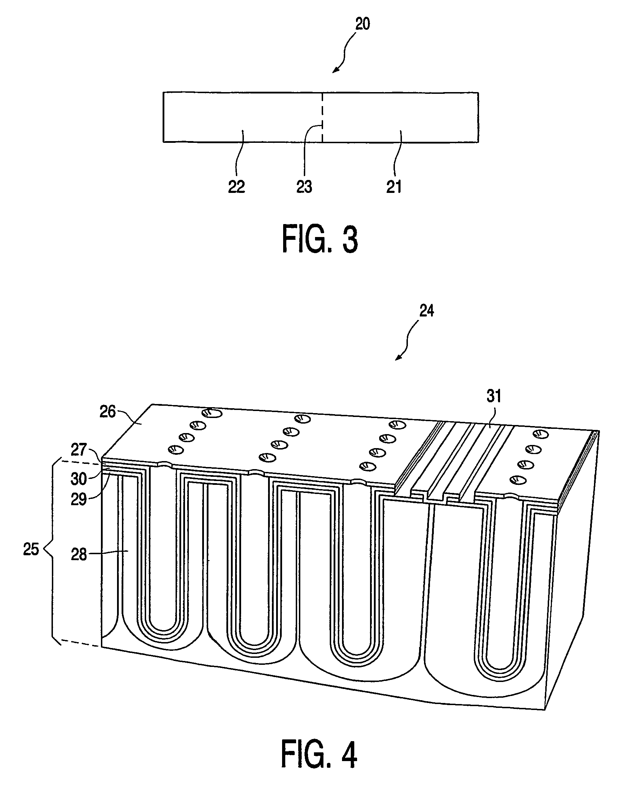

Fig. 3 shows a schematic view of a monolithic system in package (SiP) 20 according to the invention. The SiP comprises an electronic module or device 21 and an electrochemical energy source 22 according to the invention coupled thereto. The electronic module or device 21 and the energy source 22 are separated by a barrier layer 23. Both the electronic module or device 21 and the energy source 22 are mounted and/or based on the same monolithic substrate (not shown). The construction of the energy source 22 can be arbitrary, provided that the substrate is used as a (temporary) storage medium for ions and thus functions as an electrode. The electronic module or device 21 can be formed by for example a display, a chip, a control unit, et cetera. In this way numerous autonomous (ready-to-use) devices can be formed in a relatively simple manner.

Fig. 4 shows a perspective view of an alternative micro battery 24, in particular a Li-ion battery, according to the invention. The micro battery 24 comprises a first electrode 25, a second electrode 26, and a solid-state electrolyte 27 positioned in between both electrodes 25, 26. In this example the first electrode 25 is a negative electrode 25 formed by a stacked laminate of an electron-conductive substrate 28, an electron-conductive barrier layer 29, and an intercalating layer 30. The substrate 28 is patterned by way of conventional etching techniques in order to increase the contact surface between (and within) said layers 25, 26, 27 of said micro battery 24, resulting in an improved battery capacity. Both the barrier layer 29 and the intercalating layer 30 are deposited onto said substrate 28 by way of conventional deposition techniques, commonly by low-pressure chemical vapor deposition (LPCVD). Said substrate 28 can be made of any electron-conductive material, like e.g. a metal or a conductive polymer, but is commonly made of monocrystalline silicon. Due to this variety of applicable materials for said substrate 28, the substrate can be made either of a rigid material, such as silicon, or a flexible material, such as certain electron-conductive polymers like polyacetylene and poly(para phenylene vinylene) (PPV). Dependent on the application of the micro battery 24 a suitable material for said substrate 28 can be chosen. To avoid excessive diffusion of intercalating lithium ions into said silicon substrate 28, which would lead to a significant decrease of battery efficiency and battery lifetime, said barrier layer 29 is applied. This barrier layer 29 is preferably formed by tantalum and/or titanium containing compounds, like tantalum, tantalum nitride, titanium nitride, et cetera. These compounds all have a relatively low specific electrical resistance. This electron-conductive layer 29 has a relatively dense structure with reduced permeability for the intercalating lithium ions, which ions can therefore hardly diffuse into said substrate 28. The intercalation mechanism of the first electrode is therefore substantially determined by said intercalating layer 30, which is specifically adapted for temporary storage and release of the intercalating lithium ions. The barrier layer 29 preferably has a layer thickness of between 20 and 100 nanometers, more preferably between 50 and 100 nanometers. The intercalating layer 30 is commonly made of silicon, preferably amorphous silicon. The layer thickness of this intercalating layer 30 is preferably between 30 and 100 nanometers, and is more preferably about 50 nanometers. Said solid-state electrolyte 27 is preferably formed by LiPON, LiNbO₃, LiTaO₃, Li₂WO₄, et cetera. Said second positive electrode 26 is formed by a LiCoO₂ compound. The first negative electrode 25 is connected to a connector 31, which is positioned at an upper surface of said micro battery 24. Optionally an additional layer (not shown) can be applied on top of the shown stack of the microbattery 24 to provide a protection to said micro battery 24. In this particular embodiment the top layer is preferably formed by an additional barrier layer equal to the barrier layer 29 of the first electrode 25 in order to lock up the intercalating lithium ions within said micro battery 24, wherein the freedom of migration of the intercalating ions is limited, as a result of which the capacity of the micro battery 24 can be preserved. This leads to both an improved battery efficiency and an improved lifetime. It must be clear that the invention is by no means limited to the embodiments described afore. Within the framework of the appended claims, a variety of other embodiments are possible, which will be obvious to a person skilled in the art.

## Claims

1. Electrochemical energy source (1, 7, 22) comprising at least one assembly of:
- a first electrode (2, 8),
- a second electrode (6, 15, 16), and
- an intermediate solid-state electrolyte (5, 13, 14) separating said first electrode (2, 8) and said second electrode (6, 15, 16),
**characterized in that** said first electrode (2, 8) is formed at least partially by a conducting substrate (2, 8) on which the solid-state electrolyte (5, 13, 14) and the second electrode (6, 15, 16) have been deposited.

2. Electrochemical energy source (1,7,22) according to claim 1, **characterized in that** the electrolyte (5, 13, 14) and the second electrode (6, 15, 16) are applied to a contact surface (3, 9, 10) of the substrate (2,8) which is at least partially patterned.

3. Electrochemical energy source (1, 7, 22) according to claim 2, **characterized in that** the contact surface (3, 9, 10) is provided with a plurality of cavities (4,11,12) of arbitrary shape, said electrolyte (5, 13, 14) and said second electrode (6, 15, 16) being applied to at least a part of an inner surface of said cavities (4, 11, 12).

4. Electrochemical energy source (1, 7, 22) according to claim 3, **characterized in that** at least a part of the cavities (4, 11, 12) form slits (4).

5. Electrochemical energy source (1, 7, 22) according to any one of the preceding claims, **characterized in that** at least one of the first electrode (2, 8) and the second electrode (6, 15, 16) is coupled to a current collector (17, 18).

6. Electrochemical energy source (1, 7, 22) according to any one of the preceding claims, **characterized in that** the substrate (2, 8) is adapted for storage of ions of at least one of the following atoms: H, Li, Be, Mg, Na and K.

7. Electrochemical energy source (1, 7, 22) according to any one of the preceding claims, **characterized in that** the substrate (2, 8) is made of at least one of the following materials: C, Sn, Ge, Pb and, preferably doped, Si.

8. Electrochemical energy source (1, 7, 22) according to any one of the preceding claims, **characterized in that** the solid-state electrolyte (5, 13, 14) and the second electrode (6, 15, 16) are deposited on multiple sides (9,10) of the substrate (2, 8).

9. Electrochemical energy source (1, 7, 22) according to any one of the preceding claims, **characterized in that** the substrate (2, 8) is at least partially covered with a barrier layer (23) for ions.

10. Electrochemical energy source (1, 7, 22) according to any one of the preceding claims, **characterized in that** the substrate (2, 8) is supported by a support structure.

11. Electrochemical energy source (1, 7, 22) according to any one of the preceding claims, **characterized in that** the first electrode (2, 8) comprises an electron-conducting barrier layer adapted to at least substantially preclude diffusion of intercalating ions into said substrate (2, 8), said barrier layer being applied onto said substrate (2, 8).

12. Electrochemical energy source (1, 7, 22) according to claim 11, **characterized in that** the first electrode further comprises an intercalating layer deposited onto a side of said barrier layer opposite to the substrate.

13. Electrochemical energy source (1, 7, 22) according to claim 12, **characterized in that** said intercalating layer is at least substantially made of silicon, preferably amorphous silicon.

14. Electrochemical energy source (1, 7, 22) according to any one of claims 11-13, **characterized in that** said barrier layer is deposited onto said substrate.

15. Electrochemical energy source (1, 7, 22) according to any one of claims 11-14, **characterized in that** said barrier layer is at least substantially made of at least one of the following compounds: tantalum, tantalum nitride, titanium, and titanium nitride.

16. Electronic device (21) provided with at least one electrochemical energy source (1, 7, 22) according to any one of claims 1-15.

17. Electronic device (21) according to claim 16, **characterized in that** the electronic device is formed by an integrated circuit (IC).

18. Electronic device (21) according to claim 16 (?) or 17 (?), **characterized in that** the electronic device and the electrochemical energy source (1, 7, 22) form a System in Package (SiP) (20).

19. Method of manufacturing an electrochemical energy source (1, 7, 22) according to any one of claims 1-15, comprising the steps of:
A) depositing the solid-state electrolyte (5, 13, 14) on the substrate (2, 8), and
B) subsequently depositing the second electrode (6, 15, 16) on the substrate (2, 8).

20. Method according to claim 19, **characterized in that** the method is provided with step C) comprising the patterning of at least one contact surface (3, 9, 10) of the substrate (2, 8), wherein step C) is applied prior to step A).

21. Method according to claim 19 or 20, **characterized in that** the method is provided with step D) comprising subsequently depositing an electron-conducting barrier layer and an intercalation layer on the substrate (2, 8), wherein step D) is applied prior to step A).

## Patentansprüche

1. Elektrochemische Energiequelle (1, 7, 22), die mindestens eine Baugruppe aus Folgendem umfasst:
- einer ersten Elektrode (2, 8),
- einer zweiten Elektrode (6, 15, 16), und
- eines dazwischenliegenden Festkörperelektrolyts (5, 13, 14), das die genannte erste Elektrode (2, 8) und die genannte zweite Elektrode (6, 15, 16) trennt,
**dadurch gekennzeichnet, dass** die genannte erste Elektrode (2, 8) mindestens teilweise durch ein leitendes Substrat (2, 8) gebildet wird, auf dem der Festkörperelektrolyt (5, 13, 14) und die zweite Elektrode (6, 15, 16) deponiert worden sind.

2. Elektrochemische Energiequelle (1, 7, 22) nach Anspruch 1, **dadurch gekennzeichnet, dass** der Elektrolyt (5, 13, 14) und die zweite Elektrode (6, 15, 16) auf einer Kontaktoberfläche (3, 9, 10) des Substrats (2, 8) aufgebracht sind, die mindestens teilweise strukturiert ist.

3. Elektrochemische Energiequelle (1, 7, 22) nach Anspruch 2, **dadurch gekennzeichnet, dass** die Kontaktoberfläche (3, 9, 10) mit einer Vielzahl von Vertiefungen (4, 11, 12) beliebiger Form versehen ist, wobei der genannte Elektrolyt (5, 13, 14) und die genannte zweite Elektrode (6, 15, 16) auf mindestens einem Teil einer inneren Oberfläche der genannten Vertiefungen (4, 11, 12) aufgebracht sind.

4. Elektrochemische Energiequelle (1, 7, 22) nach Anspruch 3, **dadurch gekennzeichnet, dass** mindestens ein Teil der Vertiefungen (4, 11, 12) Schlitze (4) bildet.

5. Elektrochemische Energiequelle (1, 7, 22) nach einem der vorhergehenden Ansprüche, **dadurch gekennzeichnet, dass** mindestens entweder die erste Elektrode (2, 8) oder die zweite Elektrode (6, 15, 16) an einen Stromkollektor (17, 18) angeschlossen ist.

6. Elektrochemische Energiequelle (1, 7, 22) nach einem der vorhergehenden Ansprüche, **dadurch gekennzeichnet, dass** das Substrat (2, 8) zum Speichern von Ionen mindestens eines der folgenden Atome angepasst ist: H, Li, Be, Mg, Na und K.

7. Elektrochemische Energiequelle (1, 7, 22) nach einem der vorhergehenden Ansprüche, **dadurch gekennzeichnet, dass** das Substrat (2, 8) aus mindestens einem der folgenden Materialien gemacht ist: C, Sn, Ge, Pb und, vorzugsweise dotiertem, Si.

8. Elektrochemische Energiequelle (1, 7, 22) nach einem der vorhergehenden Ansprüche, **dadurch gekennzeichnet, dass** der Festkörperelektrolyt (5, 13, 14) und die zweite Elektrode (6, 15, 16) auf vielfachen Seiten (9, 10) des Substrats (2, 8) deponiert sind.

9. Elektrochemische Energiequelle (1, 7, 22) nach einem der vorhergehenden Ansprüche, **dadurch gekennzeichnet, dass** das Substrat (2, 8) mindestens teilweise mit einer Barrierenschicht (23) für Ionen bedeckt ist.

10. Elektrochemische Energiequelle (1, 7, 22) nach einem der vorhergehenden Ansprüche, **dadurch gekennzeichnet, dass** das Substrat (2, 8) von einer Trägerstruktur getragen wird.

11. Elektrochemische Energiequelle (1, 7, 22) nach einem der vorhergehenden Ansprüche, **dadurch gekennzeichnet, dass** die erste Elektrode (2, 8) eine Elektronen leitende Barrierenschicht umfasst, die angepasst ist, mindestens im Wesentlichen Diffusion von interkalierenden Ionen in das genannte Substrat (2, 8) auszuschließen, wobei die genannte Barrierenschicht auf das genannte Substrat (2, 8) deponiert ist.

12. Elektrochemische Energiequelle (1,7, 22) nach Anspruch 11, **dadurch gekennzeichnet, dass** die erste Elektrode weiter eine interkalierende Schicht umfasst, die auf einer Seite der genannten Barrierenschicht gegenüber dem Substrat deponiert ist.

13. Elektrochemische Energiequelle (1, 7, 22) nach Anspruch 12, **dadurch gekennzeichnet, dass** die genannte interkalierende Schicht mindestens im Wesentlichen aus Silizium, vorzugsweise amorphem Silizium, gemacht ist.

14. Elektrochemische Energiequelle (1, 7, 22) nach einem der Ansprüche 11 13, **dadurch gekennzeichnet, dass** die genannte Barrierenschicht auf dem genannten Substrat deponiert ist.

15. Elektrochemische Energiequelle (1, 7, 22) nach einem der Ansprüche 11 - 14, **dadurch gekennzeichnet, dass** die genannte Barrierenschicht mindestens im Wesentlichen aus einer der folgenden Verbindungen gemacht ist: Tantal, Tantalnitrid, Titan und Titannitrid.

16. Elektronische Anordnung (21).die mit mindestens einer elektrochemischen Energiequelle (1, 7, 22) nach einem der Ansprüche 1 - 15 versehen ist.

17. Elektronische Anordnung (21) nach Anspruch 16, **dadurch gekennzeichnet, dass** die elektronische Anordnung durch eine integrierte Schaltung (IC) gebildet wird.

18. Elektronische Anordnung (21) nach Anspruch 16 oder 17, **dadurch gekennzeichnet, dass** die elektronische Anordnung und die elektrochemische Energiequelle (1, 7, 22) ein System im Gehäuse (SiP) (20) bilden.

19. Verfahren zur Herstellung einer elektrochemischen Energiequelle (1, 7, 22) nach einem der Ansprüche 1 - 15, das folgende Schritte umfasst:
A) Deponieren des Festkörperelektrolyts (5, 13, 14) auf dem Substrat (2, 8) und
B) anschließendes Deponieren der zweiten Elektrode (6, 15, 16) auf dem Substrat (2, 8).

20. Verfahren nach Anspruch 19, **dadurch gekennzeichnet, dass** das Verfahren mit Schritt C), der das Strukturieren mindestens einer Kontaktoberfläche (3, 9, 10) des Substrats (2, 8) umfasst, versehen ist, worin Schritt C) vor Schritt A) angewendet wird.

21. Verfahren nach Anspruch 19 oder 20, **dadurch gekennzeichnet, dass** das Verfahren mit Schritt D), der das anschließende Deponieren einer Elektronen leitenden Barriereschicht und einer Interkalierungsschicht auf dem Substrat (2,8) umfasst, versehen ist, worin Schritt D) vor Schritt A) angewendet wird.

## Revendications

1. Source d'énergie électrochimique (1, 7, 22) comprenant au moins un ensemble de :
- une première électrode (2, 8) ;
- une deuxième électrode (6, 15, 16), et
- un électrolyte solide intermédiaire (5, 13, 14) séparant ladite première électrode (2, 8) et ladite deuxième électrode (6, 15, 16) ;
**caractérisée en ce que** ladite première électrode (2, 8) est formée au moins en partie par un substrat conducteur (2, 8) sur lequel l'électrolyte solide (5, 13, 14) et la deuxième électrode (6, 15, 16) ont été déposés.

2. Source d'énergie électrochimique (1,7, 22) suivant la revendication 1, **caractérisée en ce que** l'électrolyte (5, 13, 14) et la deuxième électrode (6, 15, 16) sont déposés sur une surface de contact (3, 9, 10) du substrat (2, 8) qui est au moins en partie formée en motif.

3. Source d'énergie électrochimique (1, 7, 22) suivant la revendication 2, **caractérisée en ce que** la surface de contact (3, 9, 10) est pourvue d'une pluralité de cavités (4, 11, 12) de forme arbitraire, ledit électrolyte (5, 13, 14) et ladite deuxième électrode (6, 15, 16) étant déposés sur au moins une partie d'une surface interne desdites cavités (4, 11, 12).

4. Source d'énergie électrochimique (1, 7, 22) suivant la revendication 3, **caractérisée en ce qu'**une partie au moins des cavités (4, 11, 12) forment des fentes (4).

5. Source d'énergie électrochimique (1, 7, 22) suivant l'une quelconque des revendications précédentes, **caractérisée en ce qu'**au moins une parmi la première électrode (2, 8) et la deuxième électrode (6, 15, 16) est connectée à un collecteur de courant (17, 18).

6. Source d'énergie électrochimique (1,7, 22) suivant l'une quelconque des revendications précédentes, **caractérisée en ce que** le substrat (2, 8) se prête au stockage d'ions d'au moins un des atomes suivants : le H, le Li, le Be, le Mg, le Na et le K.

7. Source d'énergie électrochimique (1, 7, 22) suivant l'une quelconque des revendications précédentes, **caractérisée en ce que** le substrat (2, 8) est fait d'au moins un des matériaux suivants : le C, le Sn, le Ge, le Pb et le Si, de préférence dopé.

8. Source d'énergie électrochimique (1, 7, 22) suivant l'une quelconque des revendications précédentes, **caractérisée en ce que** l'électrolyte solide (5, 13, 14) et la deuxième électrode (6, 15, 16) sont déposés sur plusieurs côtés (9, 10) du substrat (2, 8).

9. Source d'énergie électrochimique (1, 7, 22) suivant l'une quelconque des revendications précédentes, **caractérisée en ce que** le substrat (2, 8) est au moins en partie recouvert d'une couche d'arrêt (23) pour ions.

10. Source d'énergie électrochimique (1, 7, 22) suivant l'une quelconque des revendications précédentes, **caractérisée en ce que** le substrat (2, 8) est supporté par une structure de support.

11. Source d'énergie électrochimique (1, 7, 22) suivant l'une quelconque des revendications précédentes, **caractérisée en ce que** la première électrode (2, 8) comprend une couche d'arrêt conductrice d'électrons à même d'empêcher au moins en grande partie la diffusion d'ions intercalés dans ledit substrat (2, 8), ladite couche d'arrêt étant déposée sur ledit substrat (2, 8).

12. Source d'énergie électrochimique (1, 7, 22) suivant la revendication 11, **caractérisée en ce que** la première électrode comprend en outre une couche d'intercalation déposée par-dessus un côté de ladite couche d'arrêt en face du substrat.

13. Source d'énergie électrochimique (1, 7, 22) suivant la revendication 12, **caractérisée en ce que** ladite couche d'intercalation est au moins en grande partie faite de silicium, de préférence de silicium amorphe.

14. Source d'énergie électrochimique (1, 7, 22) suivant l'une quelconque des revendications 11 à 13, **caractérisée en ce que** ladite couche d'arrêt est déposée par-dessus ledit substrat.

15. Source d'énergie électrochimique (1, 7, 22) suivant l'une quelconque des revendications 11 à 14, **caractérisée en ce que** ladite couche d'arrêt est au moins en grande partie faite d'au moins un des composés suivants : le tantale, le nitrure de tantale, le titane et le nitrure de titane.

16. Dispositif électronique (21) pourvu d'au moins une source d'énergie électrochimique (1, 7, 22) suivant l'une quelconque des revendications 1 à 15.

17. Dispositif électronique (21) suivant la revendication 16, **caractérisé en ce que** le dispositif électronique est formé par un circuit intégré (CI).

18. Dispositif électronique (21) suivant la revendication (16 ou 17), **caractérisé en ce que** le dispositif électronique et la source d'énergie électrochimique (1, 7, 22) forment un système en boîtier (SiP) (20).

19. Procédé de fabrication d'une source d'énergie électrochimique (1, 7, 22) suivant l'une quelconque des revendications 1 à 15, comprenant les étapes suivantes :
A) le dépôt de l'électrolyte solide (5, 13, 14) sur le substrat (2, 8), et
B) le dépôt, ensuite, de la deuxième électrode (6, 15, 16) sur le substrat (2, 8).

20. Procédé suivant la revendication 19, **caractérisé en ce que** le procédé comporte l'étape C) comprenant la formation en motif d'au moins une surface de contact (3, 9, 10) du substrat (2, 8), dans lequel l'étape C) est exécutée avant l'étape A).

21. Procédé suivant la revendication 19 ou 20, **caractérisé en ce que** le procédé comporte l'étape D) comprenant le dépôt, ensuite, d'une couche d'arrêt conductrice d'électrons et d'une couche d'intercalation sur le substrat (2, 8), dans lequel l'étape D) est exécutée avant l'étape A).
